# EUROPEAN PATENT APPLICATION

(11) **EP 2 472 303 A1**
(43) Date of publication of application: **04.07.2012**
(21) Application number: 10425403.2
(22) Date of filing: 30.12.2010
(51) Int. Cl.: G02B 27/01

(54) **Aircraft operating parameter portable display device, in particular for helicopters**

(71) Applicant: AGUSTAWESTLAND S.p.A., 21017 Samarate (IT)
(72) Inventor: Bortolami, Simone, 21017 Samarate (IT)
(74) Representative: D'Angelo, Fabio

(57) **Abstract**

An aircraft operating parameter portable display device (1, 1', 1'', 1''', 1'''') , in particular for helicopters, having support means (2) designed to fit to the user's head, and in turn having at least a flat base wall (8) positioned, in use, above the user's eyes; emitting means (3) fitted to the support means (2) and activatable selectively to generate at least one light beam (F) directed onto the base wall (8) and representing visual information related to the status of at least one operating parameter of the aircraft on which the device (1, 1', 1'', 1''') is used; at least one lens (20), which is fitted to the base wall (8), and projects onto the background viewed by the user the visual information received from the emitting means (3) in the light beam (F); and a transparent, partly reflecting screen (4), which is fitted to the support means (2) in such a position as to receive the light beam (F) through the lens (20), and extends obliquely with respect to the base wall (8) to reflect the light beam (F) onto the user's eye.

## Description

The present invention relates to an aircraft operating parameter portable display device, in particular for helicopters, to which the following description refers purely by way of example.

The present invention may be used to advantage in particularly demanding missions, in which helicopter pilots must concentrate exclusively on their surroundings and on flying the aircraft.

Examples of such missions are when flying close to mountain faces or oil rigs, hoisting loads, or carrying out sea or mountain rescue operations.

In all these situations, the helicopter undergoes severe stress, but the pilot's attention must focus exclusively on the operation in progress, e.g. nearby obstacles or the load suspended from the helicopter, and cannot be distracted even momentarily to monitor engine conditions on the instrument panel.

To solve the problem, it is often necessary to assign a copilot to call out engine conditions to the pilot engaged in the mission, but this is both unsatisfactory and expensive.

It is an object of the present invention to provide an aircraft operating parameter portable display device designed to provide a simple, low-cost solution to the problem, that does not involve dedicated use of copilots.

According to the present invention, there is provided an aircraft operating parameter portable display device, in particular for helicopters, characterized by comprising :
- support means designed to fit to the user's head, and having at least a flat base wall positioned, in use, above the user's eyes;
- emitting means fitted to said support means and activatable selectively to generate at least one light beam directed onto said base wall and representing visual information related to the status of at least one operating parameter of the aircraft on which said device is used;
- at least one lens, which is fitted to said base wall, receives said light beam from said emitting means, and projects said visual information onto the background viewed by the user; and
- a transparent, partly reflecting screen, which is fitted to said support means in such a position as to receive the light beam through said lens, and extends obliquely with respect to said base wall to reflect the light beam onto the user's eye.

A number of preferred non-limiting embodiments of the present invention will be described by way of example with reference to the accompanying drawings, in which :
Figure 1 shows a schematic view in perspective, with parts removed for clarity, of an aircraft operating parameter portable display device, in particular for helicopters, in accordance with the teachings of the present invention;
Figure 2 shows an enlarged view in perspective of a detail of Figure 1;
Figure 3 shows a schematic view in perspective, with parts removed for clarity, of an aircraft operating parameter portable display device, in particular for helicopters, in accordance with another embodiment of the present invention;
Figure 4 shows a schematic view in perspective, with parts removed for clarity, of an aircraft operating parameter portable display device, in particular for helicopters, in accordance with another embodiment of the present invention;
Figure 5 shows a schematic view in perspective, with parts removed for clarity, of an aircraft operating parameter portable display device, in particular for helicopters, in accordance with another embodiment of the present invention;
Figure 6 shows a larger-scale schematic of the Figure 5 display device;
Figure 7 shows a schematic view in perspective, with parts removed for clarity, of an aircraft operating parameter portable display device, in particular for helicopters, in accordance with another embodiment of the present invention;
Figures 8 and 9 show how the devices according to the present invention display helicopter operating parameters in the pilot's visual field in two different operating modes.

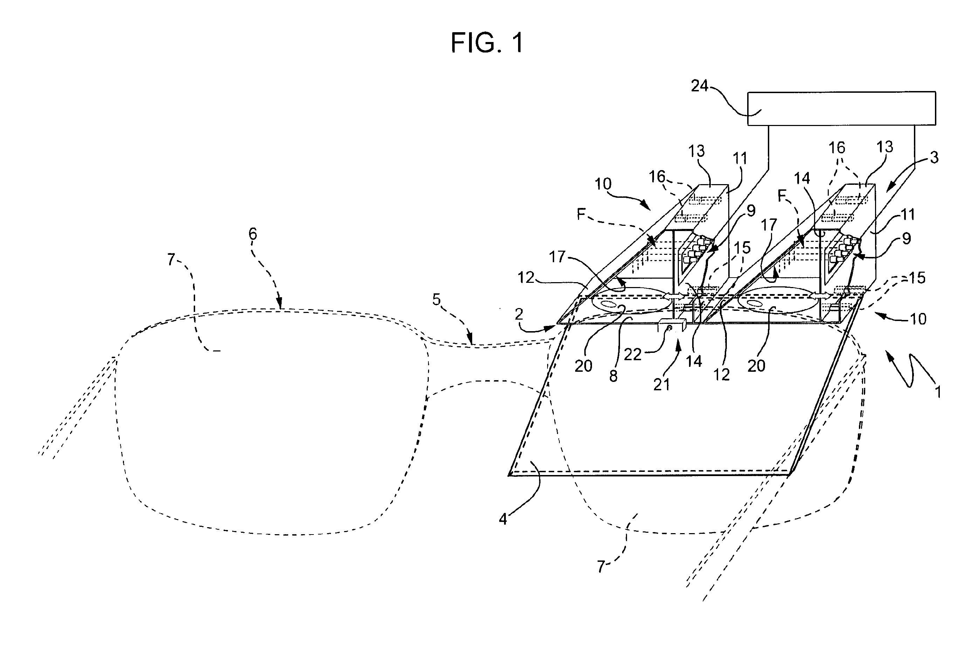

Number 1 in Figure 1 indicates as a whole a portable device, in accordance with the present invention, for displaying operating parameters of a known aircraft (not shown), in particular a helicopter.

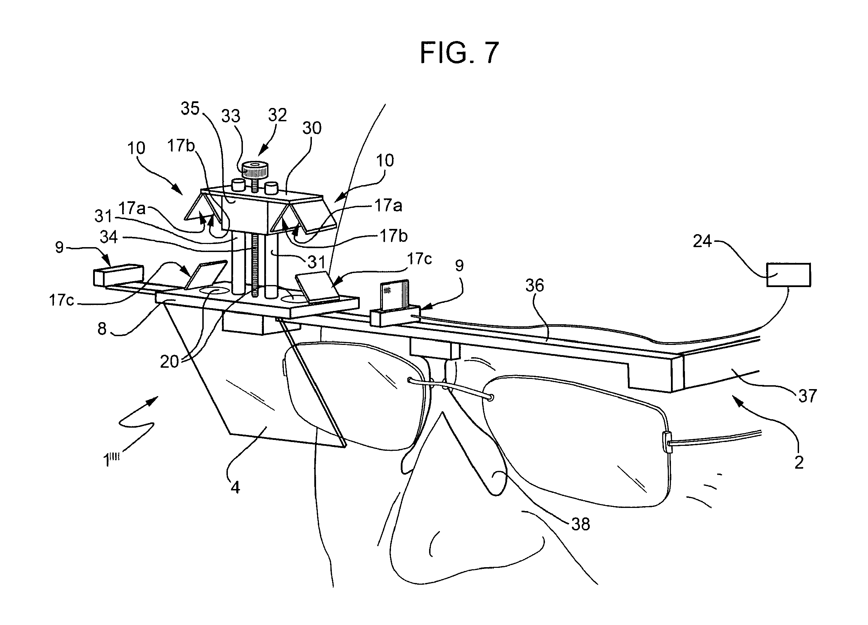

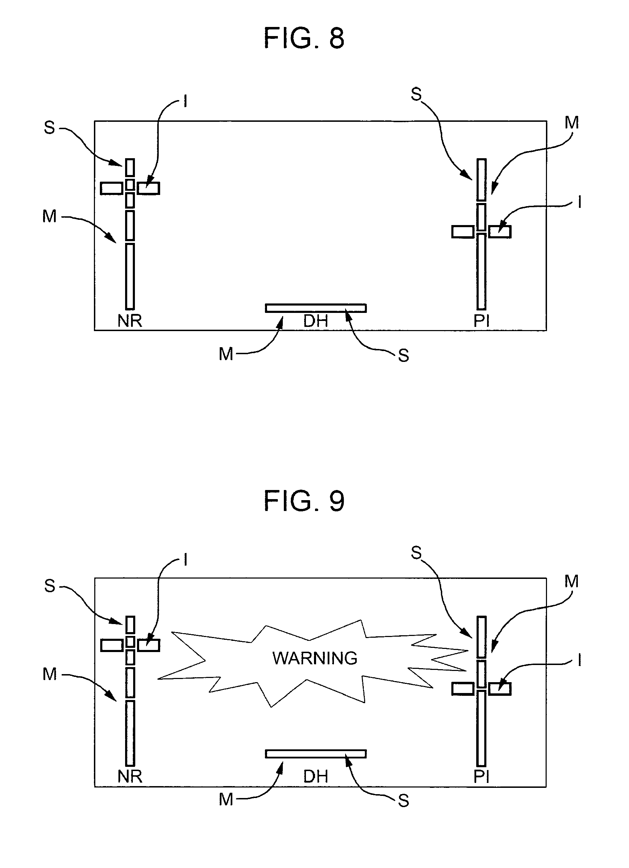

Device 1 substantially comprises a support structure 2 designed to fit to the user's head; emitting means 3 for generating one or more light beams F representing one or more visual information items - in the example shown, images M (Figures 7 and 8) - related to the status of one or more operating parameters of the helicopter on which device 1 is used; and a transparent, partly reflecting screen 4, which receives and reflects the light beam/s F onto the user's eye.

In the Figure 1 example, support structure 2 is designed to fit, e.g. by means of known clips (not shown), onto the frames 5 of eyeglasses 6 worn by the user. More specifically, device 1 and support structure 2 are only fitted above one of the lenses 7 of eyeglasses 6, preferably above the user's dominant eye.

In alternatives not shown, support structure 2 may be fixed to the pilot's headset or directly to the pilot's head.

Support structure 2 comprises a substantially flat base wall 8 positioned, in use, horizontally or at an angle above the user's eyes, and fitted at the bottom with screen 4.

More specifically, screen 4 is rectangular, and extends obliquely with respect to base wall 8 to receive and reflect light beam/s F onto the user's eye. As shown in Figure 1, screen 4 tilts towards the user's eye from base wall 8.

In the example shown, emitting means 3 comprise two emitter assemblies 9 for emitting respective light beams F and built into respective radiation units 10 fitted to and projecting from the top of base wall 8, i.e. the opposite side of base wall 8 to that from which screen 4 extends.

Each radiation unit 10 is bounded externally by a first lateral wall 11 projecting perpendicularly from base wall 8; a second lateral wall 12 facing and sloping with respect to base wall 8 and lateral wall 11; and a top wall 13 parallel to base wall 8 and connecting the top edges of lateral walls 11, 12 opposite the edges cooperating with base wall 8.

Each radiation unit 10 comprises an intermediate supporting wall 14 interposed between lateral walls 11 and 12 and parallel to lateral wall 11. Supporting wall 14 is fitted with a respective emitter assembly 9, and is mounted to slide between respective guides 15, 16 of base wall 8 and top wall 13.

Lateral wall 12 has a reflecting surface 17 facing relative emitter assembly 9 to receive from it and reflect a relative light beam F onto base wall 8 and screen 4.

Each radiation unit 10 has a lens 20 fixed to base wall 8, between lateral walls 11 and 12, in such a position as to receive the light beam F reflected by relative reflecting surface 17.

Lens 20 of each radiation unit 10 is advantageously designed to project the image M, contained in light beam F travelling through it, onto the background viewed by the user.

In other words, by virtue of lens 20, the image M, displayed to the user by screen 4 reflecting light beam F, is perceived as though projected onto the background viewed by the user.

In normal conditions, lens 20 projects image M to infinity, so the path travelled by light beam F from relative emitter assembly 9 to relative lens 20 equals the focal distance of lens 20, less any adjustments necessary to adjust the focus of image M to the user's eye.

In the Figure 1 solution, radiation units 10 extend, spaced apart, in a direction parallel to screen 4, and are positioned to direct relative light beams F close to respective opposite vertical sides of the visual field (Figures 7 and 8). More specifically, the reflecting surfaces 17 of the two radiation units 10 are in this case parallel to each other, and slope roughly 45° with respect to base wall 8.

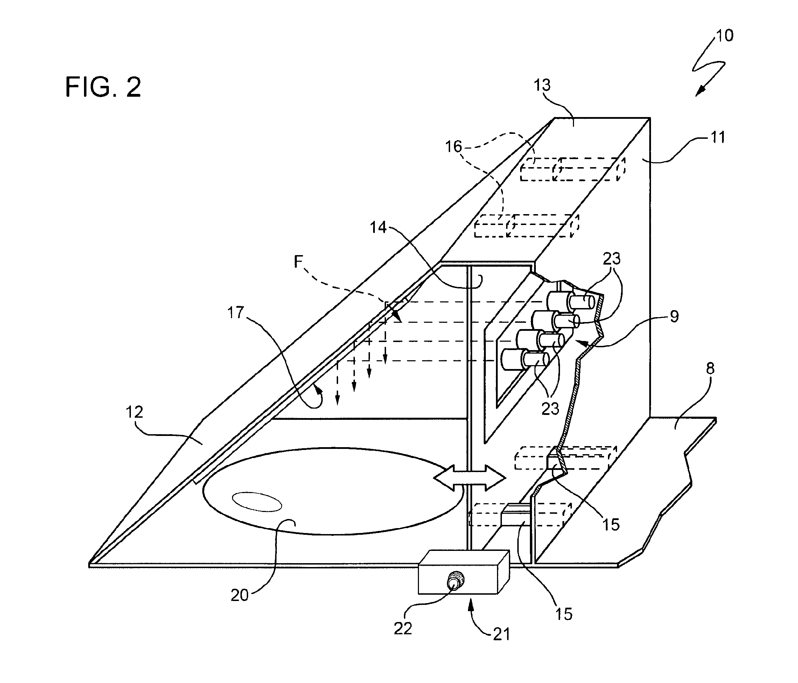

Device 1 also comprises a regulating unit 21 - shown schematically in Figures 1 and 2 - which can be user-activated selectively by a knob 22 to move supporting walls 14, and therefore emitter assemblies 9, to and from relative lenses 20, to adapt the focus of images M to the user's eye and/or to the surroundings viewed by the user during the mission.

Regulating unit 21 may, for example, comprise a known rack-and-pinion system (not shown), in which knob 22 is connected angularly to the pinion, and the bottom edges of supporting walls 14 are connected to the rack, which may be fitted movably to base wall 8. Other, e.g. screw-nut screw, systems may also be used to convert rotation of knob 22 into translation of supporting walls 14 along guides 15, 16.

Each emitter assembly 9 comprises a number of LEDs 23 for emitting light of given colours, and aligned to form the desired image/s M.

LEDs 23 are connected to a control unit 24 (shown schematically in Figure 1) forming part of the helicopter's on-board instruments, and are activated selectively by control unit 24 to represent an image M indicating the status of an operating parameter of the helicopter.

LEDs 23 of each emitter assembly 9 may be connected to control unit 24 by known cables (not shown), e.g. using Ethernet technology, or may be wireless connected, e.g. using Bluetooth technology.

In the Figure 1 and 2 example, emitter assemblies 9 display, by means of respective images M, the following operating parameters of the helicopter : engine power index, hereinafter indicated simply PI; and rotor speed, hereinafter indicated simply NR.

Other operating parameters may also be displayed. The Figure 7 and 8 solution also displays a flight height parameter, which is shown, for example, in red or amber when the flight height of the aircraft nears or falls below the minimum safety height, and is known as 'Decision Height' - hereinafter indicated simply DH.

Each parameter PI, NR, DH is displayed by a respective image M composed of rectangular stripes S.

Stripes S of parameters PI and NR are oriented vertically and displayed on the right and left sides of the visual field; and stripe S of parameter DH is oriented horizontally and displayed at the bottom centre of the visual field.

Stripe S of each parameter PI, NR comprises a succession of different-coloured areas indicating different parameter value ranges, and the relative image M comprises a horizontal-stripe indicator I, which moves up and down to indicate the current status of the parameter, and assumes the same colour as the value range it is positioned next to.

Stripe S of parameter DH is only one colour.

The display mode described (Figure 7) is active when the helicopter operates normally, i.e. when all the engines are running.

In this case, each emitter assembly 9 emits a light beam F on the basis of selective activation of relative LEDs 23 by control unit 24, to form an image M corresponding to the current status of the displayed operating parameter. Light beam F is reflected by relative reflecting surface 17 onto relative lens 20, which projects the beam-defined image M to infinity.

Image M is then displayed to the user by screen 4 reflecting light beam F, and is perceived as though optically infinite, i.e. as though projected onto the background viewed by the user.

In the event of a malfunction or warning situation (Figure 9) requiring recovery or activation of operation disengaging procedures, a warning message is displayed, e.g. in red or amber, and the projected images M flash a given number of, e.g. five, times before device 1 turns off automatically.

Device 1 comprises an on/off button (not shown).

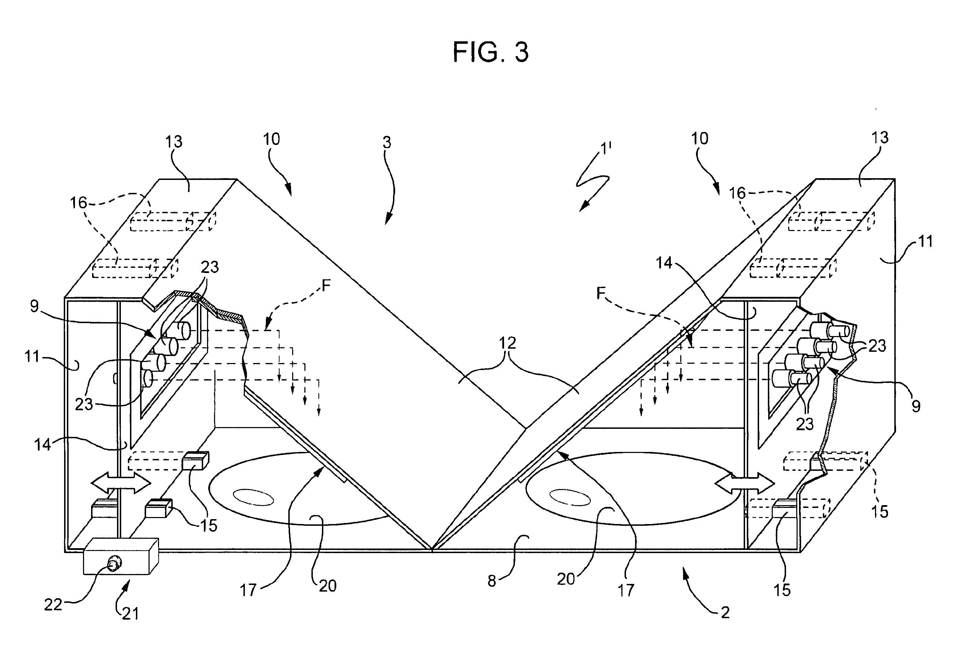

1' , 1 " , 1 " ' , 1 " " in Figures 3 to 7 indicate as a whole respective portable display devices in accordance with different embodiments of the present invention, and the component parts of which are indicated, where possible, using the same reference numbers as for corresponding or equivalent parts described with reference to device 1.

With reference to Figure 3, device 1' substantially differs from device 1 by one of radiation units 10 (in the example shown, the one closer to the user's nose) being rotated 180° in the plane of base wall 8.

Both lenses 20 are thus interposed between supporting walls 14 and, hence, between emitter assemblies 9, of the two radiation units 10; and lateral walls 12 supporting reflecting surfaces 17 slope in opposite directions at a roughly 90° angle to each other.

As shown in Figure 3, lateral walls 12, and therefore reflecting surfaces 17, are interposed between supporting walls 14, and therefore between emitter assemblies 9, and form a V shape.

Obviously, in another possible solution, supporting walls 14, and therefore emitter assemblies 9, may be interposed between lateral walls 12, and therefore between reflecting surfaces 17.

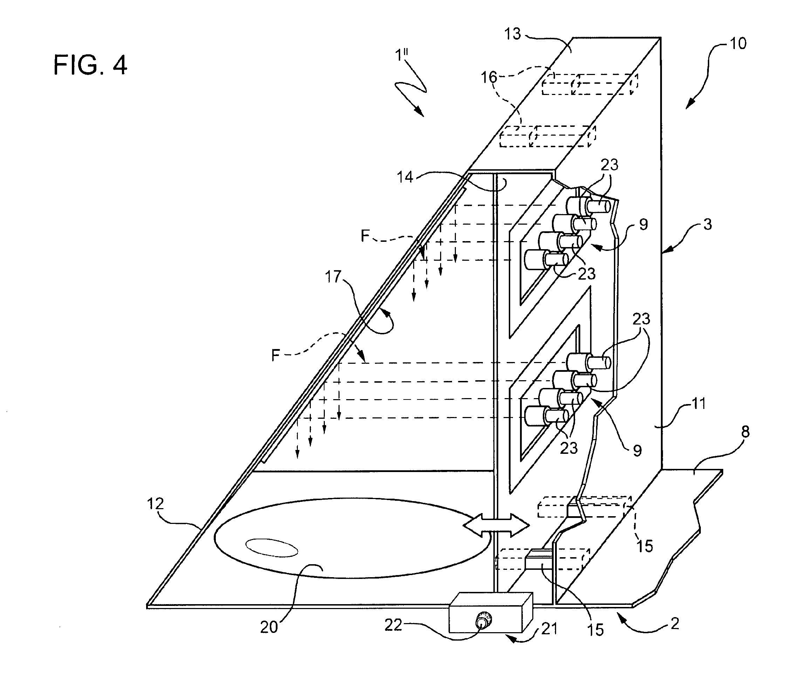

With reference to Figure 4, device 1'' substantially differs from device 1 by both emitter assemblies 9 being incorporated in the same radiation unit 10.

More specifically, in this case, both emitter assemblies 9 are fitted to supporting wall 14 of the same radiation unit 10, at different heights - measured perpendicular to base wall 8 - from base wall 8 and therefore from the same lens 20.

Given the 45° angle of lateral wall 12 and reflecting surface 17 with respect to base wall 8 and supporting wall 14, light beams F - from respective emitter assemblies 9 and reflected by reflecting surface 17 onto lens 20 - travel along the same paths, regardless of the heights of emitter assemblies 9 with respect to base wall 8.

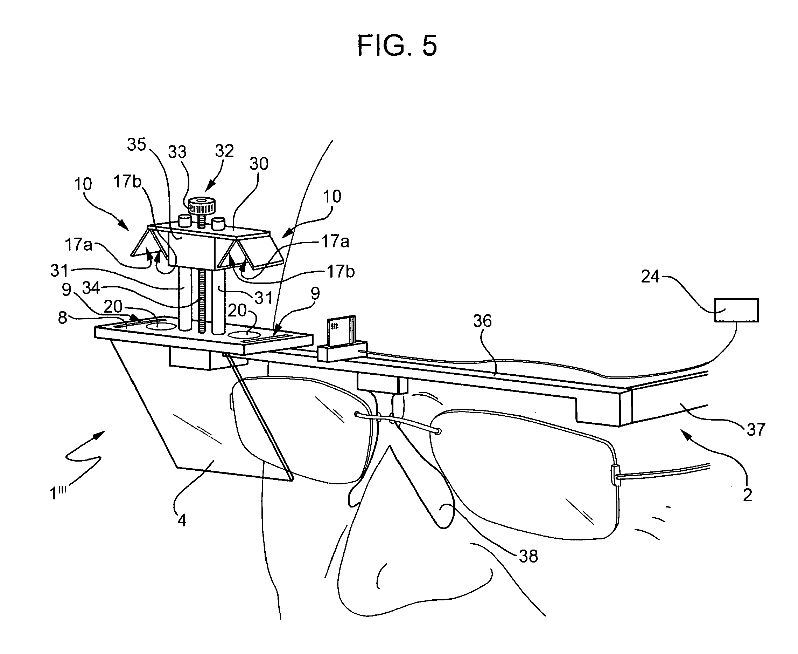

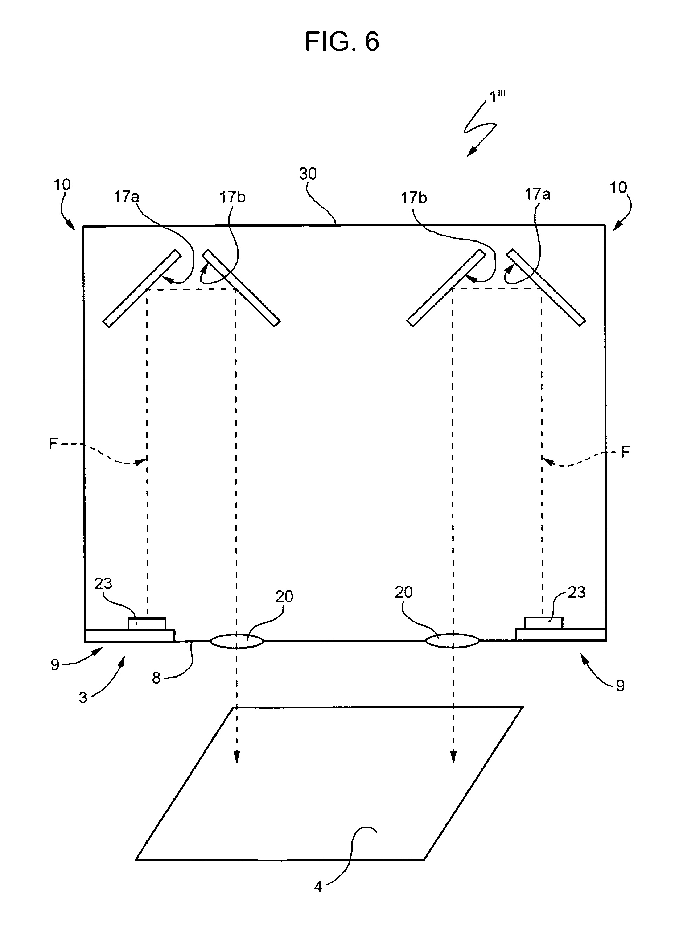

With reference to Figures 5 and 6, device 1"' substantially differs from device 1 by emitter assemblies 9 being fitted to base wall 8, alongside relative lenses 20.

In this case, each radiation unit 10 comprises a first and second reflecting surface 17a, 17b sloping in opposite directions and fitted to and projecting from a top supporting wall 30 parallel to and a given distance from base wall 8.

As shown in Figure 5, device 1'" comprises one top wall 30 fitted with reflecting surfaces 17a, 17b of both radiation units 10, and which rests on two - in the example shown, cylindrical - bars 31 projecting perpendicularly from base wall 8.

Of each radiation unit 10, reflecting surface 17a is positioned facing relative emitter assembly 9 to receive relative light beam F from it; and reflecting surface 17b is positioned facing relative lens 20 to receive light beam F reflected by reflecting surface 17a and reflect it onto lens 20.

Both reflecting surfaces 17a, 17b of each radiation unit 10 slope 45° with respect to base wall 8 and form a 90° angle, i.e. form an inverted V.

To adapt the focus of images M to the user's eye and/or to the surroundings viewed by the user during the mission, device 1''', like devices 1, 1', 1'', has a regulating unit 32 user-activatable selectively by a knob 33 to move top wall 30, and therefore reflecting surfaces 17a, 17b, to and from base wall 8, and therefore to and from the plane of lenses 20 and emitter assemblies 9.

In this case, top wall 30 slides along supporting bars 31, and regulating unit 32 comprises a screw 34 integral with knob 33 and parallel to and between bars 31; and a nut screw 35 fitted to top wall 30 and engaged by screw 34.

As shown in Figure 5, supporting structure 2 of device 1''' also comprises :
- a front bar 36 positioned, in use, at user forehead level, and fitted at the bottom with screen 4, and at the top with base wall 8, top wall 30, and bars 31;
- two lateral bows 37 extending from opposite ends of front bar 36 and attachable eyeglass-fashion to the user's ears; and
- a central support 38 projecting from the bottom of front bar 36 and which rests on the user's nose.

With reference to Figure 7, device 1'''' substantially differs from device 1'''by emitter assemblies 9 being located on opposite sides of lenses 20, and emitting respective light beams F parallel to base wall 8. In this case, each radiation unit 10 comprises an additional reflecting surface 17c fitted to base wall 8 and sloping roughly 45° to reflect the light beam F from relative emitter assembly 9 onto reflecting surface 17a. As shown in Figure 7, reflecting surfaces 17a, 17c of each radiation unit 10 are parallel.

The advantages of display devices 1, 1', 1'', 1''', 1'''' according to the present invention will be clear from the above description.

In particular, they are cheap to produce, lightweight, of simple design, and can be worn comfortably by pilots in missions allowing no distraction from the helicopter's, or more generally the aircraft's, operating environment to monitor the on-board instrument panel.

Images M are displayed through lenses 20 as though projected onto the background viewed by the pilot. This solution allows the eye to view the images in the most natural way possible, and is especially comfortable for naturally long-sighted middle-aged pilots.

The images M displayed contain only a few information items, to disturb the pilot as little as possible, and are almost static, to avoid visually confusing the pilot.

The Figure 1-3 solutions provide for compact devices 1, 1' in height but not in width, whereas the Figure 4 solution is larger in height but narrower than devices 1, 1'.

The best compromise in terms of size would appear to be the Figure 5-7 solution (devices 1''' and 1''').

Clearly, changes may be made to display devices 1, 1', 1'', 1''', 1'''' as described and illustrated herein without, however, departing from the protective scope defined in the accompanying Claims.

In particular, other types of emitting means, such as small LCD screens, may be substituted for LEDs 23.

## Claims

1. An aircraft operating parameter portable display device (1, 1', 1'', 1''', 1''''), in particular for helicopters, **characterized by** comprising :
- support means (2) designed to fit to the user's head, and having at least a flat base wall (8) positioned, in use, above the user's eyes;
- emitting means (3) fitted to said support means (2) and activatable selectively to generate at least one light beam (F) directed onto said base wall (8) and representing visual information related to the status of at least one operating parameter of the aircraft on which said device (1, 1', 1'', 1''' , 1'''') is used;
- at least one lens (20), which is fitted to said base wall (8), receives said light beam (F) from said emitting means (3), and projects said visual information onto the background viewed by the user; and
- a transparent, partly reflecting screen (4), which is fitted to said support means (2) in such a position as to receive the light beam (F) through said lens (20), and extends obliquely with respect to said base wall (8) to reflect the light beam (F) onto the user's eye.

2. A device as claimed in Claim 1, wherein said lens (20) is designed to project said visual information to infinity.

3. A device as claimed in Claim 2, wherein the path of said light beam (F) from said emitting means (3) to said lens (20) equals the focal distance of the lens (20) less any adjustments needed to adjust the focus of said visual information to the user's eye.

4. A device as claimed in any one of the foregoing Claims, wherein said emitting means (3) extend on the opposite side of said base wall (8) to said screen (4), and on one side of said lens (20); said device (1, 1', 1'') also comprising at least one reflecting surface (17) facing said base wall (8) and said emitting means (3), and extending obliquely with respect to the base wall (8) to reflect said light beam (F) onto said lens (20).

5. A device as claimed in Claim 4, and comprising regulating means (21) activatable selectively to move said emitting means (3) to and from said lens (20) to adapt the focus of said visual information to the user's eye and/or to the surroundings viewed by the user.

6. A device as claimed in any one of the foregoing Claims, wherein said emitting means (3) comprise at least two emitter assemblies (9) activatable selectively to generate respective light beams (F) directed onto said reflecting surface (17) and said base wall (8), and representing respective visual information items related to the status of respective operating parameters of the aircraft on which said device (1, 1', 1'') is used.

7. A device as claimed in Claim 6, wherein said emitter assemblies (9) are located at different heights with respect to said base wall (8), in a plane (14) crosswise to the base wall (8), to generate two separate visual information items through one said lens (20) onto said screen (4).

8. A device as claimed in Claim 6, wherein said emitter assemblies (9) are each located alongside a respective said lens (20); said device (1, 1'') comprising two said reflecting surfaces (17), each facing said base wall (8) and the relative said emitter assembly (9), and extending obliquely with respect to the base wall (8) to reflect said light beam (F) onto the relative said lens (20).

9. A device as claimed in Claim 8, wherein said lenses (20) alternate with said emitter assemblies (9) along said base wall (8), and said reflecting surfaces (17) are parallel to one another.

10. A device as claimed in Claim 8, wherein said lenses (20) are interposed between said emitter assemblies (9) along said base wall (8), and said reflecting surfaces (17) slope in opposite directions.

11. A device as claimed in Claim 10, wherein said reflecting surfaces (17) are interposed between said emitter assemblies (9), and form a V shape.

12. A device as claimed in any one of Claims 1 to 3, wherein said emitting means (3) are fitted to said base wall (8), alongside said lens (20); said device (1''') comprising a first and second reflecting surface (17a, 17b) sloping in opposite directions; said first reflecting surface (17a) facing said emitting means (3) to receive said light beam (F) from them; and said second reflecting surface (17b) facing said first reflecting surface (17a) and said lens (20) to receive the light beam (F) reflected by said first reflecting surface (17a), and reflect it onto said lens (20).

13. A device as claimed in Claim 12, and comprising regulating means (32) activatable selectively to move said first and second reflecting surface (17a, 17b) to and from said lens (20) and to and from said emitting means (3) to adapt the focus of said visual information to the user's eye and/or to the surroundings viewed by the user.

14. A device as claimed in Claim 12 or 13, wherein said emitting means (3) comprise two emitter assemblies (9) activatable selectively to generate respective light beams (F) representing respective visual information items related to the status of respective operating parameters of the aircraft on which said device (1''') is used; said device (1''') comprising, for each said light beam (F), a said lens (20) and a said first and second reflecting surface (17a, 17b).

15. A device as claimed in any one of Claims 1 to 3, wherein said emitting means (3) are located on one side of said lens (20); said device (1'''') comprising a number of reflecting surfaces (17a, 17b, 17c) by which said light beam (F) generated by said emitting means (3) is reflected before reaching said lens (20).
